# EUROPÄISCHE PATENTSCHRIFT

(11) **EP 2 507 888 B1**
(45) Veröffentlichungstag und Bekanntmachung des Hinweises auf die Patenterteilung: **11.05.2016**
(21) Anmeldenummer: 10773365.1
(22) Anmeldetag: 09.11.2010
(51) Int. Cl.: H02J 7/00, G05B 19/042

(54) **VERFAHREN ZUM EINSTELLEN VON PARAMETERN EINES FELDGERÄT-STROMVERSORGUNGSMODULS**
METHOD FOR SETTING PARAMETERS OF A FIELD DEVICE POWER-SUPPLY MODULE
PROCÉDÉ DE RÉGLAGE DE PARAMÈTRES D'UN MODULE D'ALIMENTATION EN COURANT D'UN APPAREIL DE TERRAIN

(30) Priorität: 04.12.2009 DE 102009047544
(43) Veröffentlichungstag der Anmeldung: 10.10.2012
(73) Patentinhaber: Endress + Hauser Process Solutions AG, 4153 Reinach (CH)
(72) Erfinder: SEILER, Christian, 79424 Auggen (DE); FIEDLER, Marc, CH-4153 Reinach (CH); PROBST, Stefan, 79576 Weil am Rhein (DE)
(74) Vertreter: Andres, Angelika Maria
(86) Internationale Anmeldenummer: PCT/EP2010/067147
(87) Internationale Veröffentlichungsnummer: WO 2011/067081

(56) Entgegenhaltungen:
- EP-A1- 1 045 302
- WO-A1-2005/103851
- DE-A1-102007 054 923
- Schneider Electric: "Plantstruxure - Process Automation System", , Oktober 2009 (2009-10), XP000002656938, Gefunden im Internet: URL:http://www.google.nl/url?q=http://down load.schneider-electric.nu/snb/download.as px%3Fso%3D2%26file%3DSNBDB_33313&sa=U&ei=k YBLTpGMLo3DswaG7tyWBw&ved=0CCYQFjAJ&usg=AF QjCNGAuWSRBCWc6DLoitZRcl1w09QcIA [gefunden am 2011-08-17]

## Beschreibung

Die vorliegende Erfindung betrifft ein Verfahren zum Einstellen von Energieversorgungs-Parametern eines Feldgerät-Stromversorgungsmoduls. Das Feldgerät-Stromversorgungsmodul ist dabei an ausschließlich einem Feldgerät angeschlossen. Es weist eine elektrische Energiequelle auf oder ist an einer solchen angeschlossen. Durch das Feldgerät-Stromversorgungsmodul ist das eine angeschlossene Feldgerät mit elektrischer Energie versorgbar.

In der Prozessautomatisierungstechnik werden vielfach Feldgeräte eingesetzt, die zur Erfassung und/oder Beeinflussung von Prozessvariablen dienen. Zur Erfassung von Prozessvariablen dienen Sensoren, wie beispielsweise Füllstandsmessgeräte, Durchflussmessgeräte, Druck- und Temperaturmessgeräte, pH-Redoxpotentialmessgeräte, Leitfähigkeitsmessgeräte, etc., welche die entsprechenden Prozessvariablen Füllstand, Durchfluss, Druck, Temperatur, pH-Wert bzw. Leitfähigkeit erfassen. Zur Beeinflussung von Prozessvariablen dienen Aktoren, wie zum Beispiel Ventile oder Pumpen, über die der Durchfluss einer Flüssigkeit in einem Rohrleitungsabschnitt bzw. der Füllstand in einem Behälter geändert werden kann. Als Feldgeräte werden insbesondere solche Sensoren und Aktoren bezeichnet. Eine Vielzahl solcher Feldgeräte wird von der Firma Endress + Hauser hergestellt und vertrieben.

In modernen Industrieanlagen sind Feldgeräte in der Regel über Bussysteme (Profibus®, Foundation® Fieldbus, HART®, etc.) mit übergeordneten Einheiten verbunden. Normalerweise handelt es sich bei den übergeordneten Einheiten um Leitsysteme bzw. Steuereinheiten, wie beispielsweise SPS (speicherprogrammierbare Steuerung) oder PLC (Programmable Logic Controller). Die übergeordneten Einheiten dienen unter anderem zur Prozesssteuerung, Prozessvisualisierung, Prozessüberwachung sowie zur Inbetriebnahme der Feldgeräte. Die von den Feldgeräten, insbesondere von Sensoren, erfassten Messwerte werden über das jeweilige Bussystem an eine (oder gegebenenfalls mehrere) übergeordnete Einheit(en) übermittelt. Daneben ist auch eine Datenübertragung von der übergeordneten Einheit über das Bussystem an die Feldgeräte erforderlich, insbesondere zur Konfigurierung und Parametrierung von Feldgeräten sowie zur Ansteuerung von Aktoren.

Neben einer drahtgebundenen Datenübertragung zwischen den Feldgeräten und einer übergeordneten Einheit besteht auch die Möglichkeit einer drahtlosen (wireless) Datenübertragung. Zur Realisierung einer drahtlosen Datenübertragung sind neuere Feldgeräte teilweise als Funk-Feldgeräte ausgebildet. Diese weisen in der Regel eine Funkeinheit als integralen Bestandteil auf. Ferner können Sie auch eine integrierte Stromquelle, wie beispielsweise eine Batterie, aufweisen, so dass sie als autarke Einheit betreibbar sind.

Daneben besteht die Möglichkeit, Feldgeräte ohne Funkeinheit (d.h. mit lediglich einer drahtgebundenen Kommunikationsschnittstelle) und ohne eigene Stromquelle durch Anschluss eines Wireless Adapters, der eine Funkeinheit aufweist, zu einem Funk-Feldgerät aufzurüsten. Beispielsweise ist in der Druckschrift WO 2005/103851 A1 ein Wireless Adapter beschrieben. Dabei ist ein Wireless Adapter vorzugsweise derart ausgebildet, dass er auch eine Energieversorgung (bzw. Stromversorgung) des angeschlossenen Feldgerätes ermöglicht. In letzterem Fall bildet der Wireless Adapter gleichzeitig ein Feldgerät-Stromversorgungsmodul.

Ein weiterer wireless Adapter wird in der DE 10 2007 054923 A1 beschrieben.

Ähnlich wie in einem Feldgerät sind auch in einem Wireless Adapter eine Mehrzahl von Parametern vorgesehen. Zum Teil sind diese von dem Hersteller des Wireless Adapters voreingestellt und/oder können durch einen Benutzer eingestellt, insbesondere geändert, aktiviert und/oder deaktiviert werden. Die Parameter des Wireless Adapters werden in der Regel in einem Speicher des Wireless Adapters gespeichert. Dadurch kann eine entsprechende Steuerung des Wireless Adapters (z.B. ein Mikroprozessor) auf diese Parameter zugreifen und den Wireless Adapter entsprechend den Parametereinstellungen betreiben. Durch die jeweiligen Parametereinstellungen wird dabei die Betriebsweise des Wireless Adapters bestimmt.

Falls durch den Wireless Adapter auch eine Energieversorgung (bzw. Stromversorgung) des angeschlossenen Feldgerätes bereitstellbar ist (d.h. der Wireless Adapter ist auch als Feldgerät-Stromversorgungsmodul ausgebildet), so sind in dem Wireless Adapter entsprechende Parameter vorgesehen, durch welche Einstellungen bezüglich der Energieversorgung (bzw. Stromversorgung) des Feldgerätes vornehmbar sind. Diese Parameter werden im Folgenden als Energieversorgungs-Parameter des Wireless Adapters bezeichnet. Energieversorgungs-Parameter des Wireless Adapters sind beispielsweise eine Start-Spannung (englische Bezeichnung: Start-up Voltage), die durch den Wireless Adapter während einer Startphase an das angeschlossene Feldgerät bereitgestellt wird, und eine Betriebsspannung (englische Bezeichnung: Operating Voltage), die durch den Wireless Adapter nach der Startphase an das Feldgerät bereitgestellt wird. In Abhängigkeit von dem Feldgerätetyp, der an dem Wireless Adapter angeschlossen ist, liegen unterschiedliche Anforderungen bezüglich der Energieversorgung durch den Wireless Adapter vor.

Dabei besteht bisher die Möglichkeit, bei den Energieversorgungs-Parametern des Wireless Adapters so genannte Default-Parametereinstellungen (Standard-Parametereinstellungen, die auch bereits voreingestellt sein können) zu verwenden, die für eine Vielzahl von Feldgerätetypen anwendbar sind. Solche Default-Parametereinstellungen ermöglichen in der Regel jedoch keine optimale Energieversorgung des jeweils angeschlossenen Feldgerätetyps. Die Folge hiervon kann/können insbesondere ein erhöhter Energieverbrauch und/oder eine längere Zeitdauer, bis von dem Feldgerät ein gültiger Messwert geliefert wird, sein.

Weiterhin besteht die Möglichkeit, dass die Einstellung der Energieversorgungs-Parameter durch einen Benutzer vorgenommen wird. Der Benutzer verwendet hierzu insbesondere entsprechende Konfigurationstools (deutsch: Konfigurationswerkzeuge). Auch hier tritt das Problem auf, dass der Benutzer zunächst die für den jeweils angeschlossenen Feldgerätetyp optimalen Parametereinstellungen der Energieversorgungs-Parameter ermitteln muss (beispielsweise durch Nachschlagen in der Funktionsbeschreibung des jeweiligen Feldgerätes, etc.) und diese dann anschließend in den Wireless Adapter eingeben muss. Hierfür ist für den Benutzer ein relativ hoher Aufwand erforderlich. Auch ist die Gefahr, dass Fehler auftreten, relativ groß.

Dementsprechend besteht die Aufgabe der vorliegenden Erfindung darin, ein Verfahren bereitzustellen, das bei einem Feldgerät-Stromversorgungsmodul, insbesondere bei einem Wireless Adapter, auf einfache und zuverlässige Weise die Einstellung der jeweils für einen angeschlossenen Feldgerätetyp geeigneten Parametereinstellungen von Energieversorgungs-Parametern des Feldgerät-Stromversorgungsmoduls ermöglicht.

Die Aufgabe wird durch ein Verfahren gemäß Anspruch 1 gelöst. Vorteilhafte Weiterbildungen der Erfindung sind in den Unteransprüchen angegeben.

Gemäß der vorliegenden Erfindung wird ein Verfahren zum Einstellen von Energieversorgungs-Parametern eines Feldgerät-Stromversorgungsmoduls bereitgestellt. Das Feldgerät-Stromversorgungsmodul ist dabei an ausschließlich einem Feldgerät (insbesondere an einem Sensor oder an einem Aktor) angeschlossen. Ferner weist es eine elektrische Energiequelle auf oder ist an einer solchen angeschlossen und das angeschlossene Feldgerät ist durch das Feldgerät-Stromversorgungsmodul mit elektrischer Energie (bzw. elektrischer Leistung) versorgbar. Das erfindungsgemäße Verfahren weist dabei nachfolgende Schritte auf:
A) Identifizieren eines Feldgerätetyps des angeschlossenen Feldgerätes durch das Feldgerät-Stromversorgungsmodul; und
B) Automatisiertes Auslesen einer Parametereinstellung von mindestens einem Energieversorgungs-Parameter des Feldgerät-Stromversorgungsmoduls aus einer Datenbank und Laden derselben in das Feldgerät-Stromversorgungsmodul, wobei die ausgelesene Parametereinstellung spezifisch für den identifizierten Feldgerätetyp ist, wobei der mindestens eine Energieversorgungs-Parameter eine Energieversorgung (insbesondere eine Stromversorgung) des Feldgerätes durch das Feldgerät-Stromversorgungsmodul betrifft und wobei in der Datenbank Parametereinstellungen von mindestens einem Energieversorgungs-Parameter für eine Mehrzahl von Feldgerätetypen gespeichert sind.

In einer Datenbank können auf einfache Weise für verschiedene Feldgerätetypen die jeweils geeigneten Parametereinstellungen von Energieversorgungs-Parametern verwaltet und gegebenenfalls aktualisiert werden. Indem beim Einstellen von Energieversorgungs-Parametern auf die Datenbank zugegriffen wird und die jeweils für den identifizierten Feldgerätetyp geeigneten Parametereinstellungen aus der Datenbank automatisiert ausgelesen werden, wird sichergestellt, dass in dem Feldgerät-Stromversorgungsmodul korrekte Parametereinstellungen von Energieversorgungs-Parametern vorliegen. Im Vergleich zu einer manuellen Eingabe durch einen Benutzer besteht hierbei nicht die Gefahr, dass die falschen Parametereinstellungen (beispielsweise für einen anderen Feldgerätetyp) ermittelt werden oder dass Parametereinstellungen aus Versehen fehlerhaft eingegeben werden. Dementsprechend werden Fehler beim Betrieb des Feldgerätes, die durch fehlerhafte Parametereinstellungen der Energieversorgungs-Parameter bedingt sind, und/oder ein erhöhter Energieverbrauch des Feldgerätes, der durch eine nicht optimale Parametereinstellung von Energieversorgungs-Parametern bedingt ist, vermieden. Ferner wird der für den Benutzer erforderliche Aufwand für das Einstellen der Energieversorgungs-Parameter reduziert.

Das Feldgerät-Stromversorgungsmodul muss nicht zwingend als Wireless Adapter ausgebildet sein. Vielmehr kann es sich allgemein um ein Modul handeln, das zum Anschluss an ein (einzelnes) Feldgerät ausgebildet ist und durch welches das eine angeschlossene Feldgerät mit elektrischer Energie (bzw. elektrischer Leistung) versorgbar ist. Beispielsweise kann an Stelle des bisher häufig vorgesehenen direkten Anschlusses eines Feldgerätes an den Netzstrom auch vorgesehen sein, dass es über ein erfindungsgemäßes Feldgerät-Stromversorgungsmodul an dem Netzstrom oder auch an eine anderweitige Energiequelle, die extern von und/oder intern in dem Feldgerät-Stromversorgungsmodul ausgebildet sein kann, angeschlossen ist und durch das Feldgerät-Stromversorgungsmodul mit elektrischer Energie versorgbar ist. Auf diese Weise kann die Stromversorgung optimal auf den jeweiligen Feldgerätetyp abgestimmt werden. Hierdurch kann der Verbrauch an elektrischer Energie reduziert werden. Neben der Stromversorgung des angeschlossenen Feldgerätes kann das Feldgerät-Stromversorgungsmodul auch noch weitere Funktionen ausführen.

In einem Feldgerät-Stromversorgungsmodul sind dabei in entsprechender Weise, wie dies oberhalb in Bezug auf einen Wireless Adapter erläutert wird, Parameter vorgesehen, durch die eine Betriebsweise des Feldgerät-Stromversorgungsmoduls einstellbar ist. Die Parameter werden dabei insbesondere in einem Speicher des Feldgerät-Stromversorgungsmoduls gespeichert, so dass eine Steuerung des Feldgerät-Stromversorgungsmoduls (z.B. ein Mikroprozessor) auf diese Parameter zugreifen und das Feldgerät-Stromversorgungsmodul entsprechend den Parametereinstellungen betreiben kann. Insbesondere sind in dem Feldgerät-Stromversorgungsmodul Energieversorgungs-Parameter vorgesehen, wobei durch die Parametereinstellung dieser Energieversorgungs-Parameter die Eigenschaften bzw. Kenngrößen der von dem Feldgerät-Stromversorgungsmodul bereitgestellten Energieversorgung (bzw. Stromversorgung) einstellbar sind.

Das Einstellen von Parametern wird teilweise auch als Parametrieren oder Konfigurieren bezeichnet. In entsprechender Weise, wie es bei Feldgeräten bekannt ist, können auch bei einem Feldgerät-Stromversorgungsmodul verschiedene Zugriffsmöglichkeiten zur Einstellung von Parametern desselben bereitgestellt werden. Insbesondere können Parameter des Feldgerät-Stromversorgungsmoduls über eine integral in dem Feldgerät-Stromversorgungsmodul ausgebildete Bedieneinheit (die gegebenenfalls auch als Anzeige- und Bedieneinheit ausgebildet ist) eingestellt werden. Zusätzlich oder alternativ kann auch eine (oder gegebenenfalls auch mehrere) separat von dem Feldgerät-Stromversorgungsmodul ausgebildete Konfigurationseinheit eingesetzt werden, auf der ein entsprechendes Konfigurationstool (deutsch: Konfigurationswerkzeug) implementiert ist. Solch ein Konfigurationstool (z.B. FieIdCare® von Endress + Hauser) bietet dabei in der Regel weitergehende Funktionalitäten als eine in dem Feldgerät-Stromversorgungsmodul integrierte Anzeigeund Bedieneinheit, wie beispielsweise mehr Anzeigeoptionen, Statusanzeigen, Auswerteoptionen, eine graphische Benutzeroberfläche mit einer entsprechenden Menüführung, etc.. Insbesondere wird durch solch ein Konfigurationstool in der Regel eine graphische Benutzeroberfläche mit einer entsprechenden Menüführung bereitgestellt, welche das Einstellen von Parametern erleichtert und übersichtlicher gestaltet. Die Konfigurationseinheit, auf der das Konfigurationstool implementiert ist, kann beispielsweise durch einen Rechner gebildet werden, der (beispielsweise über ein HART®-Modem) direkt an dem Feldgerät-Stromversorgungsmodul angeschlossen wird. Ist das Feldgerät-Stromversorgungsmodul gleichzeitig auch als Wireless Adapter ausgebildet, so kann die Konfigurationseinheit zur Einstellung von Parametern desselben auch drahtlos, beispielsweise über einen (drahtlosen) Feldbus (und gegebenenfalls zusätzlich auch über ein dem Feldbus übergeordnetes Netzwerk), dem der Wireless Adapter zugeordnet ist, oder auch allgemein (je nach Ausbildung des Wireless Adapters) über eine Funkverbindung (z.B. über GSM (Global System for Mobile Communications), über Bluetooth, über Wireless LAN (Wireless Local Area Network; deutsch: drahtloses lokales Datennetz)), etc., erfolgen. Dabei kann das Konfigurationstool auch auf einer Einheit implementiert sein, die in der Anlage noch weitere Aufgaben, wie beispielsweise eine Prozesssteuerung, ein Anlagen-Asset-Management, Visualisierungsaufgaben, eine Prozessüberwachung (Process Monitoring), etc., erfüllt. Diese Einheit bildet dann gleichzeitig eine Konfigurationseinheit. Ferner kann eine Konfigurationseinheit auch durch ein Bediengerät, das auch als Handheld (deutsch: Handbediengerät) bezeichnet wird, gebildet werden. Solch ein Bediengerät wird in der Regel an einer entsprechenden Service-Schnittstelle des Feldgerät-Stromversorgungsmoduls angeschlossen.

Das Feldgerät-Stromversorgungsmodul ist dabei an ausschließlich einem Feldgerät angeschlossen. Insbesondere ist es nicht zur Energieversorgung von mehreren, parallel angeschlossenen Feldgeräten ausgebildet. Dementsprechend können auch die Energieversorgungs-Parameter speziell für den jeweils angeschlossenen Feldgerätetyp eingestellt werden, so dass dessen Energieversorgung optimiert wird. Vorzugsweise ist das Feldgerät-Stromversorgungsmodul lösbar an einem Feldgerät angeschlossen. Dadurch ist es auf einfache Weise an verschiedene Feldgeräte, insbesondere auch an verschiedene Feldgerätetypen, anschließbar.

Sofern bei einigen Schritten bzw. Abläufen des Verfahrens angegeben ist, dass diese "automatisiert" durchgeführt werden, ist damit gemeint, dass diese ohne menschliches Eingreifen, insbesondere durch Soft- und/oder Hardware, ausgeführt werden.

Wie bereits oberhalb erläutert wird, betreffen die Energieversorgungs-Parameter eine Energieversorgung des Feldgerätes durch das Feldgerät-Stromversorgungsmodul. Insbesondere kann über diese die von dem Feldgerät-Stromversorgungsmodul bereitgestellte Energie (insbesondere elektrische Leistung) an einen Leistungsbedarf des jeweils angeschlossenen Feldgerätes und gegebenenfalls auch an verschiedene Betriebsphasen des Feldgerätes angepasst werden. Beispiele für Energieversorgungs-Parameter sind unter anderem Stromwerte, Spannungswerte und/oder Zeiträume (über welche beispielsweise ein bestimmter Spannungswert bereitzustellen ist), etc..

Wie oberhalb erläutert wird, unterscheiden sich die erforderlichen Parametereinstellungen der Energieversorgungs-Parameter in der Regel je nach angeschlossenem Feldgerätetyp. In der Datenbank sind dabei mehrere Parametereinstellungen (bzw. Parameterwerte) je Energieversorgungs-Parameter gespeichert, wobei eine Parametereinstellung jeweils spezifisch für einen (zugehörigen) Feldgerätetyp ist. Bei dem Schritt des automatisierten Auslesens wird dementsprechend die für den identifizierten Feldgerätetyp spezifische Parametereinstellung des mindestens einen Energieversorgungs-Parameters ausgelesen. Dabei besteht auch die Möglichkeit, in der Datenbank mehrere unterschiedliche Feldgeräte, die bezüglich der Stromversorgung identische Anforderungen aufweisen (und dementsprechend identische Parametereinstellungen der Energieversorgungs-Parameter aufweisen), zu einem Feldgerätetyp zusammenzufassen. Ferner können die Parametereinstellungen der Energieversorgungs-Parameter in dem Feldgerät-Stromversorgungsmodul auch für den Fall vorgenommen werden, dass das Feldgerät zunächst nicht durch das Feldgerät-Stromversorgungsmodul mit Energie versorgt werden soll. Sofern das Feldgerät durch das Feldgerät-Stromversorgungsmodul zu einem späteren Zeitpunkt mit Energie versorgt werden soll, liegen dann bereits die korrekten Parametereinstellungen vor.

Gemäß einer Weiterbildung wird das Feldgerät-Stromversorgungsmodul durch einen Wireless Adapter gebildet, durch den für das angeschlossene Feldgerät eine drahtlose Signalübertragung durchführbar ist. Auf diese Weise kann ein herkömmliches Feldgerät zu einem Funkfeldgerät aufgerüstet werden und gleichzeitig energiesparend betrieben werden. Dabei kann vorgesehen sein, dass durch den Wireless Adapter sämtliche Kommunikation für das Feldgerät drahtlos durchgeführt wird. Dies ist jedoch nicht zwingend. Vielmehr kann auch vorgesehen sein, dass ein Teil der Kommunikation auch drahtgebunden erfolgt. Beispielsweise kann bei einem HART®-Feldgerät vorgesehen sein, dass ein Messwert über eine drahtgebundene Kommunikationsverbindung gemäß dem 4-20 mA-Standard analog übertragen wird. Zusätzlich kann/können durch einen angeschlossenen Wireless Adapter ein Messwert, ein Steuerungsbefehl, weitergehende Diagnoseinformationen, etc., drahtlos über Funk übermittelt werden. Weiterhin können durch einen Wireless Adapter über Funk Informationen des Feldgerätes (Messwerte, Diagnoseinformationen, Statusinformationen, etc.) an eine separat ausgebildete Einheit, die für eine entsprechende drahtlose Kommunikation ausgebildet ist und die in Bezug auf die jeweilige Anlage eine Prozesssteuerung, eine Prozessüberwachung (Process Monitoring), ein Anlagen-Asset-Management und/oder Visualisierungsaufgaben, etc., ausführt, übermittelt werden sowie Telegramme von solch einer Einheit empfangen werden.

Der Wireless Adapter kann insbesondere derart ausgebildet sein, dass er einen Kommunikationsteilnehmer eines Funknetzwerkes gemäß dem Standard IEEE 802.15.4 bildet. Das Funknetzwerk kann ferner gemäß dem WirelessHART®-Standard oder gemäß dem ISA100-Standard ausgebildet sein, die jeweils auf dem Standard IEEE 802.15.4 aufbauen. Bei den genannten Funknetzwerken kommuniziert der Wireless Adapter in der Regel mit einem Gateway, das eine Kommunikation mit einem (dem Funknetzwerk) übergeordneten Netzwerk, wie beispielsweise einem drahtgebundenen Feldbus, einem Firmennetzwerk (z.B. ein Ethernet®-Netzwerk), dem Internet und/oder eine Kommunikation über GSM, etc. ermöglicht. An dem übergeordneten Netzwerk kann beispielsweise eine übergeordnete Einheit, die eine Prozesssteuerung ausführt, ein Anlagen-Asset-Managementsystem, ein Visualisierungssystem, etc. angeschlossen sein, so dass zwischen diesem und dem Feldgerät eine Kommunikation (über das Gateway und den Wireless Adapter) ermöglicht wird. Alternativ zu den oberhalb genannten standardisierten Funknetzwerken können aber auch anderweitige Funknetzwerke eingesetzt werden. Zusätzlich oder alternativ kann der Wireless Adapter auch derart ausgebildet sein, dass er eine direkte drahtlose Kommunikation (beispielsweise über GSM, Bluetooth, Wireless LAN, etc.) ermöglicht. Auf diese Weise kann er drahtlos direkt mit einer Kommunikationseinheit (z.B. eine übergeordnete Einheit, die eine Prozesssteuerung ausführt, ein Anlagen-Asset-Managementsystem, ein Visualisierungssystem, ein Vendor Asset Management System, etc.), die beispielsweise einen übermittelten Messwert benötigt oder Steuerungsbefehle für den Wireless Adapter sendet, kommunizieren.

Gemäß einer vorteilhaften Weiterbildung weist das Feldgerät-Stromversorgungsmodul mindestens eine autarke Stromquelle auf. Dadurch ist das System aus Feldgerät und Feldgerät-Stromversorgungsmodul entkoppelt von einem Netzstrom betreibbar. Ist das Feldgerät-Stromversorgungsmodul gleichzeitig als Wireless Adapter ausgebildet, so kann das System aus Feldgerät und Wireless Adapter vollständig autark (d.h. ohne Anschluss an ein externes Stromnetz und ohne drahtgebundenen Anschluss an einen Feldbus oder an ein Netzwerk) betrieben werden. Dies ist insbesondere bei ausgesetzten, schwer zugänglichen und/oder extremen Bedingungen ausgesetzten Einsatzorten in einer Anlage vorteilhaft. Das Feldgerät-Stromversorgungsmodul kann insbesondere eine Batterie, einen Akkumulator und/oder eine Solarzelle aufweisen.

Gemäß einer vorteilhaften Weiterbildung ist die Datenbank in einer Kommunikationseinheit vorgesehen, die mit dem Feldgerät-Stromversorgungsmodul in Kommunikationsverbindung steht. Dementsprechend kann die jeweilige Parametereinstellung bei dem Schritt des Auslesens aus der Datenbank in der Kommunikationseinheit ausgelesen werden und über die Kommunikationsverbindung in das Feldgerät-Stromversorgungsmodul geladen werden. Die Kommunikation kann dabei drahtgebunden und/oder über Funk erfolgen. Die Kommunikationseinheit kann dabei beispielsweise eine Einheit sein, die einen Teil der Anlage des Anlagenbetreibers bildet, wie beispielsweise eine übergeordnete Einheit, die eine Prozesssteuerung (in Bezug auf ihr zugeordnete Feldgeräte) ausführt, ein Anlagen-Asset-Managementsystem (auch als PAM-System bezeichnet; PAM: Plant Asset Management), ein Visualisierungssystem, ein Gateway (siehe nachfolgende Weiterbildung), etc.. Die Kommunikationseinheit kann dabei gleichzeitig einen Server bilden.

Ferner kann die Kommunikationseinheit auch durch einen externen Server (mit einer entsprechenden Datenbank) gebildet werden, der nicht in der Anlage des Anlagenbetreibers vorgesehen ist sondern von einem Hersteller (des Feldgerät-Stromversorgungsmoduls) bereitgestellt und aktualisiert wird. Solch ein externer, von einem Hersteller bereitgestellter Server kann gleichzeitig auch ein Vendor Asset Management Systems bilden. In solchen Vendor Asset Management Systemen werden zentral in einer Datenbank Informationen zu Feldgeräten und/oder anderweitigen Geräten, wie beispielsweise einem Feldgerät-Stromversorgungsmodul, durch den Hersteller derselben bereitgestellt. Der Zugriff darauf wird meist über entsprechende Portalseiten mit passwortgeschützten Logins ermöglicht. Ein solches Vendor Asset Management System wird beispielsweise von Endress + Hauser durch das "Web-enabled Asset Managementsystem W@M" bereitgestellt. Der Zugriff auf einen solchen externen, von dem Hersteller bereitgestellten Server (um insbesondere die jeweiligen Parametereinstellungen auszulesen) kann dabei beispielsweise von einer Kommunikationseinheit der Anlage aus erfolgen, wie beispielsweise von einem Anlagen-Asset-Managementsystem (PAM-System) aus. Wie oberhalb erläutert wird, können dann die Parametereinstellungen (je nach Aufbau und Struktur des Anlagennetzwerkes) drahtlos und/oder drahtgebunden in das Feldgerät-Stromversorgungsmodul geladen werden. Ist das Feldgerät-Stromversorgungsmodul als Wireless Adapter ausgebildet, besteht zusätzlich die Möglichkeit, dass dieser direkt mit dem externen, von dem Hersteller bereitgestellten Server drahtlos (bzw. über Funk) kommuniziert, wie beispielsweise über GSM, etc..

Gemäß einer Weiterbildung ist das Feldgerät-Stromversorgungsmodul als Wireless Adapter ausgebildet und die Datenbank ist in einem Gateway vorgesehen. Das Gateway steht dabei mit dem Feldgerät-Stromversorgungsmodul drahtlos (bzw. über Funk) in Kommunikationsverbindung und ermöglicht eine Kommunikation mit einem übergeordneten Netzwerk und/oder einer übergeordneten Rechnereinheit. Die Vorsehung der Datenbank in dem Gateway ist unter anderem deshalb vorteilhaft, da so mehrere Wireless Adapter auf einfache Weise auf die Datenbank zugreifen können. Mit "übergeordnet" wird dabei auf ein Netzwerk bzw. eine Rechnereinheit Bezug genommen, die in Bezug auf die Netzwerkstruktur übergeordnet ist. Durch das Gateway kann gegebenenfalls auch eine Protokollumsetzung erfolgen.

Gemäß einer Weiterbildung weist das Feldgerät-Stromversorgungsmodul die Datenbank auf. Dadurch sind sämtliche, für eine Einstellung der Energieversorgungs-Parameter erforderlichen Informationen in dem Feldgerät-Stromversorgungsmodul enthalten und es besteht keine Abhängigkeit von Drittsystemen. Das Laden der Parametereinstellung (aus der Datenbank) kann dabei direkt in dem Feldgerät-Stromversorgungsmodul erfolgen.

Gemäß einer Weiterbildung wird der Schritt des automatisierten Auslesens der Parametereinstellung von mindestens einem Energieversorgungs-Parameter des Feldgerät-Stromversorgungsmoduls aus der Datenbank durch das Feldgerät-Stromversorgungsmodul durchgeführt. Auch kann der Schritt des Ladens der ausgelesenen Parametereinstellung automatisiert durch das Feldgerät-Stromversorgungsmodul erfolgen. Es kann aber auch vorgesehen sein, dass die ausgelesene Parametereinstellung zunächst einem Benutzer vorgeschlagen wird (z.B. durch Anzeige auf einer entsprechenden Anzeigeeinheit) und das Laden erst nach Bestätigung durch den Benutzer automatisiert (durch das Feldgerät-Stromversorgungsmodul) durchgeführt wird.

Gemäß einer Weiterbildung ist die Datenbank in einer Konfigurationseinheit, durch die Parameter des Feldgerät-Stromversorgungsmoduls einstellbar sind, vorgesehen. Als Konfigurationseinheit wird dabei eine Einheit bezeichnet, auf der ein entsprechendes Konfigurationstool (beispielsweise Field-Care® von Endress + Hauser) implementiert ist. In Bezug auf eine Kommunikation zwischen der Konfigurationseinheit und dem Feldgerät-Stromversorgungsmodul bestehen, je nach Ausbildung und Aufbau der Netzwerkstruktur und der beteiligten Kommunikationsteilnehmer, eine Mehrzahl von Möglichkeiten der Kommunikation, wie bereits oberhalb erläutert wurde.

Bei dieser Weiterbildung können insbesondere Informationen zur Geräteintegration des Feldgerät-Stromversorgungsmoduls, wie beispielsweise eine Gerätebeschreibung und/oder ein Gerätetreiber des Feldgerät-Stromversorgungsmoduls, die Datenbank aufweisen. Solche Informationen zur Geräteintegration werden bei Feldgeräten eingesetzt und können in entsprechender Weise auch bei einem Wireless Adapter bzw. allgemein bei einem Feldgerät-Stromversorgungsmodul eingesetzt werden, um ein Einstellen von Parametern bzw. allgemein auch ein Bedienen desselben über ein Konfigurationstool zu ermöglichen. Durch "Informationen zur Geräteintegration" eines Gerätes (englische Bezeichnung: means for device integration) werden allgemein die Eigenschaften des Gerätes, die für eine Bedienung desselben relevant sind, beschrieben. Informationen zur Geräteintegration des Feldgerät-Stromversorgungsmoduls können dabei insbesondere Informationen, die für eine Einstellung von Parametern desselben erforderlich sind, aufweisen. Informationen zur Geräteintegration des Feldgerät-Stromversorgungsmoduls können beispielsweise durch eine Gerätebeschreibung (DD) (engl.: "Device Description") gebildet werden. Die Gerätebeschreibung wird in der Regel in textbasierter Form erstellt (z.B. im ASCII-Textformat). Die in der Gerätebeschreibung bereitgestellten Informationen werden in der Regel durch einen Interpreter interpretiert bzw. übersetzt und an das Konfigurationstool, das eine Rahmenapplikation für die Gerätebeschreibung bildet, bereitgestellt. Ferner können Informationen zur Geräteintegration des Feldgerät-Stromversorgungsmoduls auch durch einen Gerätetreiber des Feldgerätes, insbesondere einen "Device Type Manager" (DTM) (deutsch: Gerätetyp-Manager), gebildet werden. Ein Gerätetreiber, insbesondere ein "Device Type Manager", ist dabei eine gerätespezifische Software, die Daten und Funktionen des Feldgerät-Stromversorgungsmoduls kapselt und graphische Bedienelemente bereitstellt. Solch ein Gerätetreiber benötigt zur Ausführung eine entsprechende Rahmenapplikation, beispielsweise benötigt ein "Device Type Manager" zur Ausführung eine FDT-Rahmenapplikation (FDT: Field Device Tool). Ein Konfigurationstool, das solch eine FDT-Rahmenapplikation bildet, ist beispielsweise "FieldCare®" von Endress + Hauser.

Gemäß einer Weiterbildung ist die Datenbank in einer mit der Konfigurationseinheit in Kommunikationsverbindung stehenden Kommunikationseinheit vorgesehen. Eine mit der Konfigurationseinheit in Kommunikationsverbindung stehende Kommunikationseinheit kann in entsprechender Weise, wie dies oberhalb in Bezug auf eine mit dem Feldgerät-Stromversorgungsmodul in Kommunikationsverbindung stehende Kommunikationseinheit erläutert wurde, durch eine intern in der Anlage (beispielsweise ein Anlagen-Asset-Managementsystem, etc.) und/oder durch eine extern von der Anlage (beispielweise ein Vendor Asset Management System) vorgesehene Kommunikationseinheit gebildet werden. Dementsprechend kann die jeweilige Parametereinstellung bei dem Schritt des Auslesens aus der Datenbank in der Kommunikationseinheit ausgelesen werden und über die Konfigurationseinheit in das Feldgerät-Stromversorgungsmodul geladen werden. Die Kommunikationsverbindung (für das Laden der Parametereinstellung) kann dabei drahtgebunden und/oder drahtlos erfolgen.

Bei Vorsehung der Datenbank in der Konfigurationseinheit und/oder in einer mit der Konfigurationseinheit in Verbindung stehenden Kommunikationseinheit wird der Schritt des automatisierten Auslesens durch die Konfigurationseinheit initiiert. Ferner kann auch der Schritt des Ladens der ausgelesenen Parametereinstellung automatisiert durch die Konfigurationseinheit erfolgen. Es kann aber auch vorgesehen sein, dass die ausgelesene Parametereinstellung zunächst einem Benutzer vorgeschlagen wird (z.B. durch Anzeige in der Konfigurationseinheit) und das Laden erst nach Bestätigung durch den Benutzer automatisiert (durch die Konfigurationseinheit) durchgeführt wird.

Gemäß einer Weiterbildung ist eine Datenbank, in der Parametereinstellungen von mindestens einem Energieversorgungs-Parameter für eine Mehrzahl von Feldgerätetypen gespeichert sind, zentral in einem Server vorgesehen und es wird mindestens eine Datenbank, die
a) in dem Feldgerät-Stromversorgungsmodul,
b) in einer Kommunikationseinheit, die mit dem Feldgerät-Stromversorgungsmodul in Kommunikationsverbindung steht,
c) in einer Konfigurationseinheit, durch die Parameter des Feldgerät-Stromversorgungsmoduls einstellbar sind, und/oder
d) in einer Kommunikationseinheit, die mit der Konfigurationseinheit in Kommunikationsverbindung steht,
vorgesehen ist, unter Zugriff auf die in dem Server vorgesehene Datenbank aktualisiert. Dementsprechend kann die zentral in einem Server vorgesehene Datenbank auf einfache Weise verwaltet und aktualisiert werden. Weitere Datenbanken, die in einer Anlage des Anlagenbetreibers (z.B. gemäß einer oder mehrerer der Varianten a) bis d)) vorgesehen sind, können dann unter Zugriff auf die zentral in dem Server vorgesehene Datenbank aktualisiert werden. Solch eine Aktualisierung kann beispielsweise automatisiert in periodischen Zeitabständen und/oder durch einen Benutzer initiiert erfolgen. Der Server kann beispielsweise ein Anlagen-Asset-Managementsystem oder ein Vendor Asset Management System bilden.

Ferner kann auch vorgesehen sein, dass in einer Anlage in mehreren Einheiten (z.B. auf verschiedenen Stufen bezüglich der Netzwerkstruktur) jeweils eine Datenbank vorgesehen ist. Beispielsweise kann in einem oder mehreren Feldgerät-Stromversorgungsmodul(en), in einem Gateway und in einem Anlagen-Asset-Managementsystem jeweils eine Datenbank vorgesehen sein, wobei die Datenbanken jeweils unter Zugriff auf eine Datenbank einer Einheit in einer übergeordneten Ebene aktualisiert werden. D.h. zur Aktualisierung greift ein Feldgerät-Stromversorgungsmodul auf das Gateway zu, das Gateway auf das Anlagen-Asset-Managementsystem und das Anlagen-Asset-Managementsystem kann gegebenenfalls auf ein Vendor Asset Management System zugreifen. Dabei kann aber (sowohl bezüglich der Vorsehung einer Datenbank als auch bezüglich der Aktualisierung) auch eine oder mehrere dieser Stufen übersprungen werden. Insbesondere kann ein Feldgerät-Stromversorgungsmodul (sofern es als Wireless Adapter ausgebildet ist) und/oder ein Gateway zur Aktualisierung von dessen Datenbank direkt drahtlos mit einem Vendor Asset Management System kommunizieren.

Gemäß einer Weiterbildung ist das Feldgerät-Stromversorgungsmodul an einer Kommunikationsschnittstelle des Feldgerätes angeschlossen. Ist das Feldgerät-Stromversorgungsmodul als Wireless Adapter ausgebildet, so werden zum Senden von Daten über den Feldbus diese Daten über die Kommunikationsschnittstelle (drahtgebunden) an den Wireless Adapter gesendet, der diese dann über Funk an den Zielort übermittelt. Umgekehrt kann der Wireless Adapter über Funk Daten empfangen und über die Kommunikationsschnittstelle an das Feldgerät weiterleiten.

Gemäß einer Weiterbildung ist die Kommunikationsschnittselle als Feldbus-Kommunikationsschnittstelle ausgebildet und eine Kommunikation darüber erfolgt gemäß dem jeweiligen Feldbus-Protokoll. Hierbei ist insbesondere ein standardisiertes Feldbus-System, wie beispielsweise Profibus® (vgl. Profibus Profile Specification, Version 3.0) oder Foundation® Fieldbus (vgl. Foundation® Specification, Function Block Application Process, Revision FS 1.7) geeignet, wobei eine Feldbus-Kommunikationsschnittstelle gemäß dem HART®-Standard (vgl. HART® Field Communication Protocol Specifications, Revision 7.0) aufgrund der häufigen Anwendung dieses Feldbus-Systems und aufgrund seiner guten Eignung für eine drahtlose Kommunikation bevorzugt ist. Ist das Feldgerät-Stromversorgungsmodul gleichzeitig als Wireless Adapter ausgebildet, so erfolgt vorzugsweise auch die drahtlose Kommunikation gemäß dem jeweiligen Feldbus-Standard, gemäß dem auch die (drahtgebundene) Kommunikationsschnittstelle des Feldgerätes ausgebildet ist. In Bezug auf die drahtgebundene Kommunikationsschnittstelle des Feldgerätes kann das Feldgerät als 2-Leiter-Gerät ausgebildet sein, was bedeutet, dass sowohl die Kommunikation als auch die Energieversorgung (bzw. Stromversorgung) des Feldgerätes über eine gemeinsame 2-Leiter-Verbindung erfolgt. Ferner kann das Feldgerät auch als 4-Leiter-Gerät ausgebildet sein, was bedeutet, dass die Kommunikation über eine 2-Leiter-Verbindung und die Energieversorgung des Feldgerätes über eine weitere 2-Leiter-Verbindung erfolgen.

Gemäß einer Weiterbildung fragt das Feldgerät-Stromversorgungsmodul bei dem Schritt des Identifizierens von dem angeschlossenen Feldgerät eine Feldgerätetyp-Kennung, anhand welcher der jeweilige Feldgerätetyp eindeutig identifizierbar ist, ab.

Gemäß einer Weiterbildung überwacht das Feldgerät-Stromversorgungsmodul, ob ein Feldgerät eines neuen Feldgerätetyps an demselben angeschlossen wird und es initiiert dann das Verfahren zum Einstellen von Energieversorgungs-Parametern desselben, wenn es erkennt, dass ein Feldgerät eines neuen Feldgerätetyps angeschlossen wurde. Dementsprechend wird erkannt, wenn erstmals an dem Feldgerät-Stromversorgungsmodul ein Feldgerät angeschlossen wird. Ferner wird erkannt, wenn ein an dem Feldgerät-Stromversorgungsmodul angeschlossenes Feldgerät durch ein Feldgerät eines anderen Feldgerätetyps ausgetauscht wurde. Das Überwachen kann beispielsweise derart erfolgen, dass durch das Feldgerät-Stromversorgungsmodul der Feldgerätetyp des angeschlossenen Feldgerätes in periodischen Zeitabständen abgefragt wird. Wird das System aus Feldgerät-Stromversorgungsmodul und Feldgerät nur getaktet (z.B. jeweils nur bei einer Messwert-Anfrage oder einem Stell-Befehl) in einem Ein-Zustand betrieben und ist es für den Rest der Zeit in einem Aus-Zustand oder in einem Sleep-Modus (deutsch: Schlaf-Modus; Modus mit gegenüber dem Ein-Zustand reduzierten Energieverbrauch), so wird vorzugsweise bei jedem Einschalten in den Ein-Zustand durch das Feldgerät-Stromversorgungsmodul überprüft, ob noch derselbe Feldgerätetyp angeschlossen ist.

Gemäß einer Weiterbildung sind in der Datenbank Parametereinstellungen mindestens eines der nachfolgenden Energieversorgungs-Parameter des Feldgerät-Stromversorgungsmoduls jeweils für eine Mehrzahl von Feldgerätetypen gespeichert:
a) eine Startspannung, die durch das Feldgerät-Stromversorgungsmodul während einer Startphase des jeweiligen Feldgerätetyps bereitzustellen ist;
b) ein Startstrom, der von dem jeweiligen Feldgerätetyp während der Startphase desselben benötigt wird;
c) eine Startzeit, während der durch das Feldgerät-Stromversorgungsmodul für den jeweiligen Feldgerätetyp die Startspannung bereitzustellen ist;
d) eine Betriebsspannung, die durch das Feldgerät-Stromversorgungsmodul während eines normalen Betriebs des jeweiligen Feldgerätetyps nach dessen Startphase bereitzustellen ist; und/oder
e) eine Set-up-Zeitdauer (deutsch: Einstellungs-Zeitdauer), welche die Zeitdauer zwischen einem Start-Zeitpunkt des normalen Betriebs des Feldgerätetyps und dem Zeitpunkt, zu dem der Feldgerätetyp einen gültigen Messwert liefert, angibt.

Je nach Feldgerätetyp können hierbei aber auch andere und/oder weitere Betriebsphasen des Feldgerätes mit entsprechendem Spannungs- und Strombedarf vorgesehen sein. In entsprechender Weise können auch in dem Feldgerät-Stromversorgungsmodul andere oder weitere Parameter vorgesehen sein, durch welche eine Energieversorgung des angeschlossenen Feldgerätes während dessen verschiedener Betriebsphasen charakterisiert wird.

Die vorliegende Erfindung betrifft ferner ein Feldgerät-Stromversorgungsmodul, das eine Datenbank aufweist, in der Parametereinstellungen von mindestens einem Energieversorgungs-Parameter für eine Mehrzahl von Feldgerätetypen gespeichert sind, und das derart ausgebildet ist, dass durch das Feldgerät-Stromversorgungsmodul das erfindungsgemäße Verfahren ausführbar ist. Ferner kann es auch zur Ausführung einer oder mehrerer der oberhalb erläuterten Weiterbildungen ausgebildet sein.

Weitere Vorteile und Zweckmäßigkeiten der Erfindung ergeben sich anhand der nachfolgenden Beschreibung von Ausführungsbeispielen unter Bezugnahme auf die beigefügten Figuren. Von den Figuren zeigen:
- Fig. 1:: eine schematische Darstellung eines Teils einer Anlage der Prozessautomatisierungstechnik mit einem Funknetzwerk;
- Fig. 2:: ein schematisches Diagramm, das beispielhaft den Verlauf eines Spannungsbedarfs eines HART®-Feldgerätes zeigt;
- Fig. 3:: ein Blockschaltbild eines Feldgerätes und eines angeschlossenen Wireless Adapters; und
- Fig. 4:: ein Blockschaltbild eines Feldgerätes und eines angeschlossenen FeldgerätStromversorgungsmoduls.

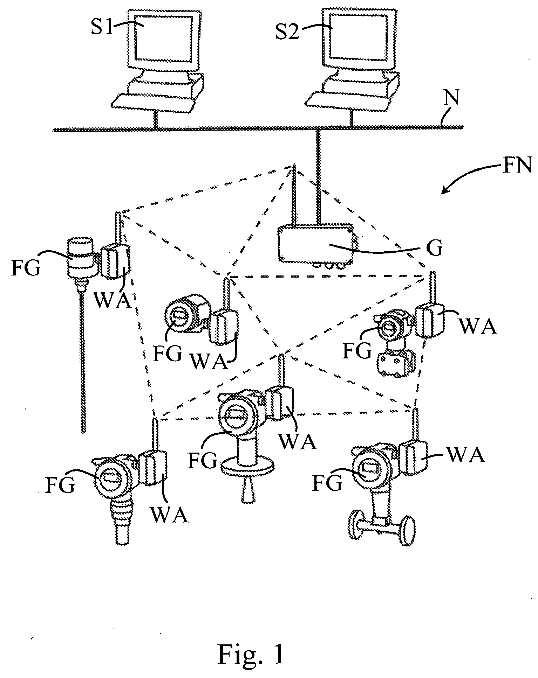

In Fig. 1 ist schematisch ein Teil einer Anlage der Prozessautomatisierungstechnik mit einem Funknetzwerk FN dargestellt. Das Funknetzwerk FN weist eine Mehrzahl von Feldgeräten FG mit jeweils daran angeschlossenen Wireless Adaptern WA sowie ein Gateway G auf. Die Wireless Adapter WA stehen untereinander und mit dem Gateway G jeweils in Funkverbindung, was in Fig. 1 durch die gestrichelten Linien dargestellt ist. Das Funknetzwerk ist dabei gemäß dem WireessHART®-Standard ausgebildet. Bei dem dargestellten Ausführungsbeispiel steht das Gateway (beispielsweise das Produkt "Fieldgate" von Endress + Hauser) über ein drahtgebundenes Ethernet® Firmennetzwerk N mit zwei Servern S1 und S2 in Kommunikationsverbindung. Der eine Server S1 bildet gleichzeitig eine übergeordnete Einheit, die in Bezug auf die Feldgeräte FG des Funknetzwerkes FN eine Prozesssteuerung ausführt. Der weitere Server S2 bildet gleichzeitig ein Anlagen-Asset-Managementsystem. Der weitere Server S2 kann ferner in Kommunikationsverbindung (beispielsweise über das Internet) mit einem (nicht dargestellten) Vendor Asset Management System stehen. Ferner können an dem Firmennetzwerk N auch noch weitere (nicht dargestellte) Server, Feldbus-Systeme, etc. angeschlossen sein.

Bei dem dargestellten Ausführungsbeispiel weisen die Wireless Adapter WA jeweils eine Datenbank, die in einem Speicher des Wireless Adapter WA gespeichert ist und in der Parametereinstellungen einer Mehrzahl von Energieversorgungs-Parametern für eine Mehrzahl von Feldgerätetypen gespeichert sind, auf. Jeder Wireless Adapter WA ist dabei derart ausgebildet, dass durch diesen das erfindungsgemäße Verfahren ausführbar ist. Ergänzend wird hierzu auf den allgemeinen Beschreibungsteil und die nachfolgende Figurenbeschreibung verwiesen. Ferner kann auch in dem Gateway G, in einem oder beiden der Server S1 und S2 und/oder in einem (nicht dargestellten) Vendor Asset Management System eine solche Datenbank vorgesehen sein. Wie oberhalb erläutert wird, kann dabei eine Datenbank (z.B. eine Datenbank eines Wireless Adapters WA) unter Zugriff auf eine (bezüglich der Netzwerkstruktur) übergeordnete Datenbank (z.B. eine Datenbank in dem Gateway, in dem Server S1 und/oder S2, und/oder in dem Vendor Asset Management System) ak-tualisiert werden.

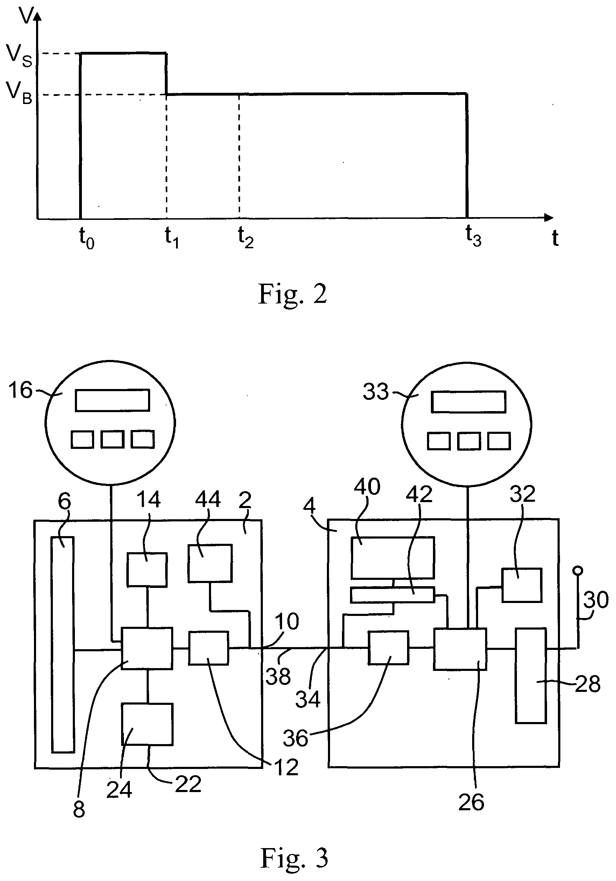

Fig. 2 zeigt schematisch den Verlauf eines Spannungsbedarfs (Spannung V aufgetragen über der Zeit t) eines HART®-Feldgerätes, das, wie in Fig. 1 dargestellt ist, von einem Wireless Adapter mit elektrischer Energie versorgt wird und das einen Sensor bildet. Das Feldgerät wird bei dem dargestellten Ausführungsbeispiel getaktet für die Abarbeitung einer Messwertanfrage eingeschaltet. In den Zeiträumen, in denen keine Messwertanfrage durch das Feldgerät abzuarbeiten ist, sind das System aus Wireless Adapter und Feldgerät ausgeschaltet.

In Fig. 2 wird das Feldgerät zu dem Zeitpunkt t₀ eingeschaltet. Während einer Startphase benötigt das Feldgerät eine Startspannung V_{S}. Ferner wird durch das Feldgerät ein gewisser Startstrom benötigt, der während der Startphase je nach Bedarf auch (über die Zeit) variieren kann. Während der Startphase werden durch das Feldgerät beispielsweise Kondensatoren innerhalb des Feldgerätes geladen, Selbstchecks durchgeführt, etc.. Eine Kommunikation zwischen dem Feldgerät und dem daran angeschlossenen Wireless Adapter ist dabei in der Regel noch nicht möglich. Um während der Startphase die erforderliche Startspannung bereitstellen zu können, ist in dem Wireless Adapter der Energieversorgungs-Parameter "Startspannung" vorgesehen, der entsprechend dem Bedarf des jeweiligen Feldgerätetyps eingestellt werden kann. Ferner sind in dem Wireless Adapter in Bezug auf die Startphase die Energieversorgungs-Parameter "Startstrom" und "Startzeit" vorgesehen. Für den "Startstrom" wird dabei als Parametereinstellung der maximale Stromwert eingegeben, den das Feldgerät während der Startphase benötigt. Die Parametereinstellung des "Startstromes" wird dabei insbesondere intern in dem Wireless Adapter für die korrekte Einstellung der Startspannung verwendet. Durch die Parametereinstellung der "Startzeit" wird die Zeit angegeben, während der das Feldgerät die Startspannung benötigt und diese dementsprechend durch den Wireless Adapter bereitzustellen ist. Bei dem dargestellten Ausführungsbeispiel ist die Startphase des Feldgerätes zu dem Zeitpunkt t₁ beendet, so dass als Parametereinstellung der "Startzeit" die Zeitdauer von t₀ bis t₁ einzustellen ist.

Nach Ablauf der Startzeit geht das Feldgerät in den normalen Betrieb über. Während des normalen Betriebs benötigt das Feldgerät eine Betriebsspannung V_{B}. In dem dargestellten Ausführungsbeispiel ist diese niedriger als die Startspannung V_{S}, sie kann je nach Feldgerätetyp aber auch höher sein. Um während der Startphase die erforderliche Betriebsspannung bereitstellen zu können, ist in dem Wireless Adapter der Energieversorgungs-Parameter "Betriebsspannung" vorgesehen, der entsprechend dem Bedarf des jeweiligen Feldgerätetyps eingestellt werden kann. In dem normalen Betrieb ist bereits eine Kommunikation des Feldgerätes über dessen HART®-Kommunikationsschnittstelle möglich. In dem normalen Betrieb kann das HART®-Feldgerät, das in dem vorliegenden Ausführungsbeispiel durch ein 2-Leiter-Gerät gebildet wird, insbesondere in einem Multidrop-Modus betrieben werden, in dem der Stromwert auf einen festen, möglichst niedrigen Stromwert (z.B. 4 mA) eingestellt wird und eine Kommunikation über die HART®-Kommunikationsschnittstelle ausschließlich digital erfolgt. Alternativ kann das HART®-Feldgerät aber auch in einem 4-20 mA-Modus betrieben werden, in dem der Stromwert (in bekannter Weise) jeweils entsprechend dem durch das Feldgerät erfassten Messwert (sofern es sich bei dem Feldgerät um einen Sensor handelt) analog eingestellt wird. Zusätzlich kann das 4-20 mA-Signal in bekannter Weise durch ein digitales Signal überlagert werden.

Direkt nach Umschalten in den normalen Betrieb kann das Feldgerät noch keinen Messwert bereitstellen. Beispielsweise benötigt das Feldgerät noch Zeit, um einen oder mehrere Messwert(e) aufzunehmen, Berechnungen durchzuführen, etc.. Die Zeitdauer, die nach dem Umschalten in den normalen Betrieb (Zeitpunkt t₁) bis zu dem Zeitpunkt vergeht, bis das Feldgerät einen Messwert bereitstellen kann (Zeitpunkt t₂) wird als Set-up-Zeitdauer (deutsch: Einstellungs-Zeitdauer) bezeichnet. Je nach Feldgerätetyp kann diese Zeitdauer zwischen einigen Sekunden bis zu einigen Minuten dauern. Für die Einstellung dieser Set-up-Zeitdauer ist in dem Wireless Adapter der Energieversorgungs-Parameter "Set-up-Zeitdauer" vorgesehen, der entsprechend dem jeweiligen Feldgerätetyp eingestellt werden kann. Diese Set-up-Zeitdauer wird vorzugsweise durch den Wireless Adapter nach Umschalten des Feldgerätes in den normalen Betrieb abgewartet, bevor er von dem Feldgerät einen Messwert abfragt. Davor kann der Wireless Adapter in einem energiesparenden Modus betrieben werden, so dass nicht unnötig Energie verbraucht wird. Zu dem Zeitpunkt t₃ wurde die Messwert-Anfrage vollständig abgearbeitet und das Feldgerät wird wieder ausgeschaltet.

Im Folgenden wird unter Bezugnahme auf Fig. 3 beispielhaft anhand des dargestellten schematischen Blockschaltbildes ein Feldgerät 2 und ein daran angeschlossener Wireless Adapter 4 erläutert. Das Feldgerät 2 ist wiederum ein Sensor und ist als 2-Leiter-Gerät ausgebildet. Insbesondere bildet das System aus Feldgerät 2 und Wireless Adapter 4 ein System, wie es in Fig. 1 jeweils durch die Paare aus einem Feldgerät FG und einem Wireless Adapter WA dargestellt ist.

Das Feldgerät 2 weist einen Messwertaufnehmer 6 und eine Steuereinheit, die als Mikroprozessor 8 ausgebildet ist, auf. Ferner weist das Feldgerät 2 eine mit dem Mikroprozessor 8 in Verbindung stehende drahtgebundene HART®-Kommunikationsschnittstelle 10 auf. Der HART®-Kommunikationsschnittstelle 10 ist eine Funktionseinheit 12 zugeordnet, die durch einen ASIC (engl.: application specific integrated circuit; deutsch: anwendungsspezifische integrierte Schaltung) gebildet wird und die das Senden und/oder Empfangen von Signalen (entsprechend dem HART®-Standard) über die HART®-Kommunikationsschnittstelle 10 durchführt. Über die HART®-Kommunikationsschnittstelle 10 könnte das Feldgerät 2 alternativ zu dem dargestellten Anschluss an den Wireless Adapter 4 an ein drahtgebundenes HART®-Feldbussystem angeschlossen werden. Weiterhin weist das Feldgerät 2 einen Datenspeicher 14 und eine Anzeige- und Bedieneinheit 16 auf. Ferner ist an dem Feldgerät 2 schematisch eine Service-Schnittstelle 22 dargestellt, der wiederum eine Funktionseinheit 24 in Form eines ASIC zugeordnet ist.

Der Wireless Adapter 4 weist ebenfalls eine Steuereinheit in Form eines Mikroprozessors 26 auf. Zum Datenaustausch über das Funk-Netzwerk ist der Mikroprozessor 26 mit einer Funkeinheit 28 verbunden, die ein RF-Chipset und eine Antenne 30 aufweist. Die Funkeinheit 28 ist dabei derart ausgebildet, dass die drahtlose Kommunikation gemäß dem WirelessHART®-Standard erfolgt. Der Mikroprozessor 26 ist ferner mit einem Datenspeicher 32 verbunden. In dem Datenspeicher 32 sind die Parametereinstellungen des Wireless Adapters 4 gespeichert. Der Mikroprozessor 26 kann auf diese Parametereinstellungen zugreifen, um den Wireless Adapter 4 entsprechend den Parametereinstellungen zu betreiben. Ferner weist der Datenspeicher 32 eine Datenbank auf, in der Parametereinstellungen von mehreren Energieversorgungs-Parametern für eine Mehrzahl von Feldgerätetypen gespeichert sind. Der Wireless Adapter 4 weist ferner eine Anzeige- und Bedieneinheit 33 auf. Zur Kommunikation mit dem Feldgerät 2 weist der Wireless Adapter 4 eine drahtgebundene HART®-Kommunikationsschnittstelle 34 auf, der wiederum eine Funktionseinheit 36, die das Senden und/oder Empfangen von Signalen über die HART®-Kommunikationsschnittstelle 34 (gemäß dem HART®-Standard) durchführt, zugeordnet ist. Die Funktionseinheit 36 wird dabei wiederum durch einen ASIC gebildet. Die HART®Kommunikationsschnittstelle 10 des Feldgerätes 2 und die HART®-Kommunikationsschnittstelle 34 des Wireless Adapters 4 werden über eine 2-Leiter-Verbindungsleitung 38 miteinander verbunden. Über diese Verbindung erfolgt sowohl die Kommunikation zwischen dem Feldgerät 2 und dem Wireless Adapter 4 als auch die Stromversorgung des Feldgerätes 2 durch den Wireless Adapter 4. Durch den Wireless Adapter 4 ist folglich für das angeschlossene Feldgerät 2 eine drahtlose Signalübertragung durchführbar.

Zur Bereitstellung der Stromversorgung des Feldgerätes 2 (und des Wireless Adapters 4) weist der Wireless Adapter 4 eine Stromquelle in Form einer Batterie 40 und ein an der Batterie 40 angeschlossenes Netzteil 42 auf. Über das Netzteil 42 werden die Systemkomponenten des Wireless Adapters 4 (über nicht dargestellte Stromversorgungsleitungen) sowie die Systemkomponenten des Feldgerätes 2 über die HART®-Kommunikationsschnittstelle 34, die 2-Leiter-Verbindungsleitung 38, die HART®-Kommunikationsschnittstelle 10 und ein daran angeschlossenes Netzteil 44 des Feldgerätes 2 mit elektrischer Energie (bzw. elektrischer Leistung) versorgt. Dabei können die einzelnen Netzteile 42 und 44 auch jeweils in mehrere Netzteilstufen unterteilt sein. Das Netzteil 42 des Wireless Adapters 4 wird dabei durch den Mikroprozessor 26 entsprechend den Parametereinstellungen der Energieversorgungs-Parameter angesteuert. Durch das Netzteil 42 wird dementsprechend eine den Parametereinstellungen entsprechende Energieversorgung bereitgestellt.

Im Folgenden wird unter Bezugnahme auf Fig. 3 eine Ausführungsform des erfindungsgemäßen Verfahrens erläutert. Zunächst wird das System aus Feldgerät 2 und Wireless Adapter 4 mit Default-Parametereinstellungen der Energieversorgungs-Parameter in Betrieb genommen, so dass ein sicheres Starten des Systems aus Feldgerät 2 und Wireless Adapter 4 ermöglicht wird. Wenn das Feldgerät 2 in den normalen Betrieb gegangen ist, fragt der Wireless Adapter 4 von dem Feldgerät 2 (in einer HART®-Kommunikation) eine Feldgerätetyp-Kennung ab, anhand welcher der Feldgerätetyp des Feldgerätes 2 eindeutig identifizierbar ist. Anhand dieser Feldgerätetyp-Kennung identifiziert der Wireless Adapter 4 den Feldgerätetyp des Feldgerätes 2. Anschließend liest der Wireless Adapter 4 die Parametereinstellungen der Energie-Versorgungsparameter "Startspannung", "Startstrom", "Startzeit", "Betriebsspannung" und "Set-up-Zeitdauer" aus der in dem Datenspeicher 32 gespeicherten Datenbank aus. Die ausgelesenen Parametereinstellungen werden anschließend in den Wireless Adapter 4 geladen und als anwendbare Parametereinstellungen in dem Datenspeicher 32 gespeichert. Für die Speicherung der aktuell anwendbaren Parametereinstellungen und die Speicherung der Datenbank kann der Datenspeicher 32 dabei in mehrere Speicherabschnitte unterteilt sein. Im Folgenden (insbesondere bei einem erneuten Start des Systems aus Feldgerät 2 und Wireless Adapter 4, wie beispielsweise bei einer erneuten Messwert-Anfrage) wird der Wireless Adapter 4 dann mit den Parametereinstellungen der Energieversorgungs-Parameter betrieben, die dem Feldgerätetyp des angeschlossenen Feldgerätes 2 entsprechen.

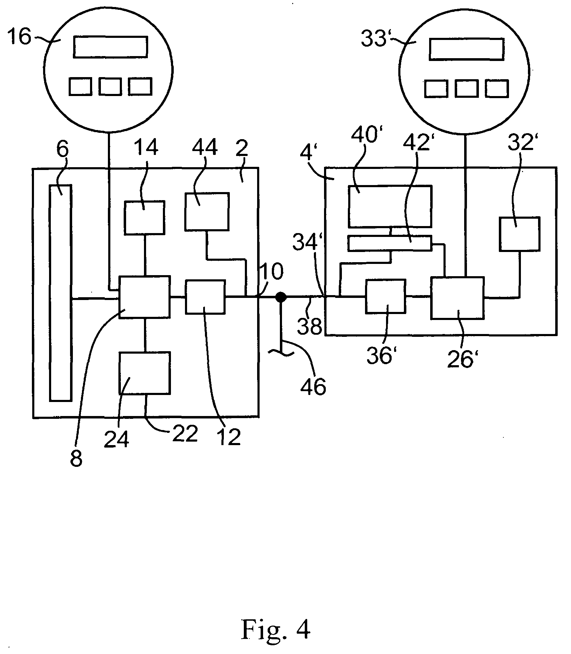

Nachfolgend wird unter Bezugnahme auf Fig. 4 beispielhaft anhand des dargestellten schematischen Blockschaltbildes ein Feldgerät 2 und ein daran angeschlossenes Feldgerät-Stromversorgungsmodul 4' erläutert. Im Folgenden werden vorwiegend die Unterschiede gegenüber der in Fig. 3 dargestellten Anordnung erläutert.

Das Feldgerät 2 ist entsprechend dem in Fig. 3 dargestellten Feldgerät 2 aufgebaut, so dass wiederum die gleichen Bezugszeichen verwendet werden. Durch das Feldgerät-Stromversorgungsmodul 4' ist im Unterschied zu dem Wireless Adapter 4 der Fig. 3 keine drahtlose Signalübertragung für das Feldgerät 2 durchführbar. Dementsprechend weist das Feldgerät-Stromversorgungsmodul 4' auch keine Funkeinheit und keine Antenne auf. Im Übrigen ist das dargestellte Feldgerät-Stromversorgungsmodul 4' in entsprechender Weise, wie der in Fig. 3 dargestellte Wireless Adapter 4 aufgebaut. Insbesondere weist es einen Mikroprozessor 26', einen Datenspeicher 32', eine Anzeige- und Bedieneinheit 33', eine HART®-Kommunikationsschnittstelle 34', eine dieser zugeordnete Funktionseinheit 36', eine Batterie 40' und ein Netzteil 42' auf. Die HART®-Kommunikationsschnittstelle 10 des Feldgerätes 2 und die HART®-Kommunikationsschnittstelle 34' des Feldgerät-Stromversorgungsmoduls 4' sind wiederum über eine 2-Leiter-Verbindungsleitung 38 miteinander verbunden, so dass eine Kommunikation gemäß dem HART®-Standard zwischen dem Feldgerät 2 und dem Feldgerät-Stromversorgungsmodul 4' möglich ist. Um im Rahmen der Prozesssteuerung mit einer übergeordneten Einheit kommunizieren zu können, ist das Feldgerät 2 über dessen HART®-Kommunikationsschnittstelle 10 in dem dargestellten Ausführungsbeispiel ferner drahtgebunden an einem Feldbus angeschlossen, was in Fig. 4 durch den Abzweig 46 von der 2-Leiter-Verbindungsleitung 38 schematisch dargestellt ist. Die unter Bezugnahme auf Fig. 3 erläuterte Ausführungsform des erfindungsgemäßen Verfahrens ist bei der in Fig. 4 gezeigten Anordnung in entsprechender Weise realisierbar.

## Patentansprüche

1. Verfahren zum Betreiben eines Feldgerätes,
welches Feldgerät von einem Wireless Adapter mit elektrischer Energie versorgt wird,
wobei das Feldgerät zu einem Zeitpunkt (t0) eingeschaltet wird,
wobei das Feldgerät während einer Startphase eine Startspannung (VS) benötigt,
wobei das Feldgerät während der Startphase einen gewissen Startstrom benötigt
wobei in dem Wireless Adapter ein Energieversorgungs-Parameter in Form einer Startspannung vorgesehen ist, welcher entsprechend dem Bedarf des jeweiligen Feldgerätetyps eingestellt werden kann,
wobei in dem Wireless Adapter ferner die Energieversorgungs-Parameter in Form eines Startstrom und einer Startzeit vorgegeben sind,
wobei durch den Energieversorgungs-Parameter in Form der Startzeit, die Zeit angegeben wird, während der das Feldgerät die Startspannung benötigt und diese durch den Wireless Adapter bereitgestellt wird,
wobei das Feldgerät nach Ablauf der Startzeit in einen normalen Betrieb übergeht, während welchem das Feldgerät eine Betriebsspannung (V_{B}) benötigt, die niedriger oder höher als die Startspannung (Vs) ist,
wobei in dem Wireless Adapter ein Energieversorgungs-Parameter in Form einer Betriebsspannung vorgesehen ist, um während der Startphase die erforderliche Betriebsspannung bereitzustellen.

2. Verfahren nach Anspruch 1,
wobei es sich bei dem Feldgerät um ein HART-Feldgerät handelt.

3. Verfahren nach Anspruch 1 oder 2,
wobei das Feldgerät getaktet für die Abarbeitung einer Messwertanfrage eingeschaltet wird.

4. Verfahren nach Anspruch 1, 2 oder 3,
wobei in den Zeiträumen, in denen keine Messwertanfrage durch das Feldgerät abzuarbeiten ist, das System aus Feldgerät und Wireless Adapter ausgeschaltet werden.

5. Verfahren nach einem der vorherigen Ansprüche,
wobei der Startstrom, während der Startphase je nach Bedarf, insbesondere über die Zeit, variiert.

6. Verfahren nach einem der vorherigen Ansprüche,
wobei eine Kommunikation zwischen dem Feldgerät und dem daran angeschlossenen Wireless Adapter während der Startphase in der Regel nicht möglich ist.

7. Verfahren nach einem der vorherigen Ansprüche,
wobei für den Startstrom der maximale Stromwert, den das Feldgerät während der Startphase benötigt, als Energieversorgungs-Parameter eingegeben wird.

8. Verfahren nach einem der vorherigen Ansprüche,
wobei die Einstellung des Energieversorgungs-Parameters in Form des Startstroms intern in dem Wireless Adapter für die korrekte Einstellung der Startspannung verwendet.

9. Verfahren nach einem der vorherigen Ansprüche, wobei es sich bei dem Feldgerät um ein HART-Feldgerät handelt,
wobei in dem normalen Betrieb eine Kommunikation des Feldgerätes über dessen HART-Kommunikationsschnittstelle möglich ist.

## Claims

1. Procedure for operating a field device,
said field device being supplied with electrical energy by a wireless adapter, wherein the field device is switched on at a point in time (tO),
wherein the field device requires a start voltage (Vₛ) during a starting phase, wherein, during the starting phase, the field device requires a certain start current, wherein an energy supply parameter in the form of a start voltage is provided in the wireless adapter, wherein said parameter can be configured according to the needs of the individual field device type,
wherein the energy supply parameters in the form of a start current and a start time are prespecified in the wireless adapter,
wherein the energy supply parameter in the form of the start time specifies the time during which the field device requires the start voltage and this voltage is provided by the wireless adapter,
wherein, when the start time elapses, the field device goes to a normal mode during which the field device requires an operating voltage (V_{B}) which is lower or higher than the start voltage (Vₛ),
wherein an energy supply parameter in the form of an operating voltage is provided in the wireless adapter in order to provide the necessary operating voltage during the starting phase.

2. Procedure as claimed in Claim 1,
wherein the field device is a HART field device.

3. Procedure as claimed in Claim 1 or 2,
wherein the field device is switched on in a synchronized manner to process a measurement query.

4. Procedure as claimed in Claim 1, 2 or 3,
wherein the system consisting of the field device and the wireless adapter is switched off in the times in which the field device does not need to process a measurement query.

5. Procedure as claimed in one of the previous claims,
wherein the start current varies during the starting phase as required. particularly over the time.

6. Procedure as claimed in one of the previous claims,
wherein communication between the field device and the wireless adapter connected to the field device is generally not possible during the starting phase.

7. Procedure as claimed in one of the previous claims,
wherein, for the start current, the maximum current value which the field device requires during the starting phase is entered as the energy supply parameter.

8. Procedure as claimed in one of the previous claims,
wherein the setting for the energy supply parameter in the form of the start current is used internally in the wireless adapter to set the start voltage correctly.

9. Procedure as claimed in one of the previous claims,
wherein the field device is a HART field device,
wherein, in normal mode, the field device can communicate via its HART communication interface.

## Revendications

1. Procédé destiné à l'exploitation d'un appareil de terrain,
lequel appareil de terrain est alimenté en énergie électrique par un adaptateur sans fil,
pour lequel l'appareil de terrain est mis sous tension à un instant (tO),
pour lequel l'appareil de terrain requiert pendant une phase de démarrage une tension de démarrage (Vₛ),
pour lequel l'appareil de terrain requiert pendant la phase de démarrage un courant de démarrage déterminé,
pour lequel est prévu, dans l'adaptateur sans fil, un paramètre d'alimentation en énergie sous la forme d'une tension de démarrage, lequel paramètre peut être réglé selon les besoins du type d'appareil de terrain concerné,
pour lequel sont prédéfinis en outre dans l'adaptateur sans fil, les paramètres d'alimentation en énergie sous la forme d'un courant de démarrage et d'un temps de démarrage,
pour lequel est indiqué au moyen du paramètre d'alimentation en énergie sous la forme du temps de démarrage, le temps pendant lequel l'appareil de terrain requiert la tension de démarrage et met celle-ci à disposition par l'intermédiaire de l'adaptateur sans fil,
pour lequel l'appareil de terrain passe, après l'écoulement du temps de démarrage, dans un mode de fonctionnement normal, pendant lequel l'appareil de terrain requiert la tension de fonctionnement (V_{B}), qui est inférieure ou supérieure à la tension de démarrage (Vₛ),
pour lequel est prévu dans l'adaptateur sans fil un paramètre d'alimentation en énergie sous la forme d'une tension de fonctionnement, afin de mettre à disposition la tension de fonctionnement nécessaire pendant la phase de démarrage.

2. Procédé selon la revendication 1,
pour lequel il s'agit, concernant l'appareil de terrain, d'un appareil de terrain HART.

3. Procédé selon la revendication 1 ou 2,
pour lequel l'appareil de terrain est mis sous tension de façon synchronisée pour le traitement d'une requête de valeurs mesurées.

4. Procédé selon la revendication 1, 2 ou 3,
pour lequel dans les intervalles de temps, pendant lesquels aucune requête de valeurs mesurées ne doit être traitée par l'appareil de terrain, le système constitué de l'appareil de terrain et de l'adaptateur sans fil est mis hors tension.

5. Procédé selon l'une des revendications précédentes,
pour lequel le courant de démarrage varie pendant la phase de démarrage selon les besoins, notamment au fil du temps.

6. Procédé selon l'une des revendications précédentes,
pour lequel, pendant la phase de démarrage, une communication n'est en principe pas possible entre l'appareil de terrain et l'adaptateur sans fil qui y est connecté.

7. Procédé selon l'une des revendications précédentes,
pour lequel est entrée, en tant que paramètre d'alimentation en énergie, la valeur de courant maximale pour le courant de démarrage, paramètre dont l'appareil de terrain a besoin pendant la phase de démarrage.

8. Procédé selon l'une des revendications précédentes,
pour lequel le réglage du paramètre d'alimentation en énergie est utilisé pour le réglage correct de la tension de démarrage, sous la forme du courant démarrage à l'intérieur de l'adaptateur sans fil.

9. Procédé selon l'une des revendications précédentes,
pour lequel il s'agit, concernant l'appareil de terrain, d'un appareil de terrain HART,
pour lequel, en fonctionnement normal, une communication de l'appareil de terrain est possible par l'intermédiaire de son interface de communication HART.
